# EUROPEAN PATENT SPECIFICATION

(11) **EP 0 467 921 B1**
(45) Date of publication and mention of the grant of the patent: **22.06.1994**
(21) Application number: 90905706.9
(22) Date of filing: 09.04.1990
(51) Int. Cl.: C04B 18/08

(54) **PROCEDURE FOR THE ADMIXTURE OF SILICON OXIDE TO A HYDRAULIC CEMENT SLURRY**
VERFAHREN ZUM MISCHEN EINES SILIZIUMOXYDS ZU EINEM HYDRAULISCHEN ZEMENTSCHLAMM
PROCEDE DE MELANGE D'OXYDE DE SILICIUM A UN LAIT DE CIMENT HYDRAULIQUE

(30) Priority: 10.04.1989 NO 891463
(43) Date of publication of application: 29.01.1992
(73) Proprietor: DEN NORSKE STATS OLJESELSKAP A.S., 4001 Stavanger (NO)
(72) Inventor: VASS Y, Bjoern, N-4027 Stavanger (NO)
(74) Representative: Rees, David Christopher
(86) International application number: NO9000063
(87) International publication number: WO9011977

(56) References cited:
- EP-A- 0 146 912
- DE-A- 3 522 677
- NO-B- 148 995

## Description

The present invention relates to a procedure for the admixture of silicon oxide to a hydraulic cement slurry.

In addition, a hydraulic cement slurry produced according to said procedure.

This type of hydraulic cement slurry is primarily used in hydrocarbon wells and in geo-thermal wells.

Cement slurries with silicon oxide admixture are typically used in oil well cement where their primary purpose is to prevent reduction of cement slurry strength over time, particularly at high pressure and temperatures exceeding 100°C.

In connection with primary cementing of hydrocarbon wells, cement slurries are pumped down through casings in the well, and up on the outside, filling the annulus between the casing and borehole wall. The major purposes of the cementing are:
1) Support and protect the casing.
2) Isolate weak structures or high-pressure zones.
3) Prevent water, oil or gas from moving between structures or up to the surface.

When exposed to temperatures above 100°C over an extended period, an ordinary cement slurry used in hydrocarbon wells will gradually lose its pressure strength at the same time as its permeability increases. These properties increase with increasing temperature.

At temperatures above 130°C, this may occur after just 24 hours. This may develop to a stage where the cement crumbles and thus loses its function.

At temperatures above 100°C, the ordinary C-S-H (calcium-silicate-hydrate) binding turns to alpha-calcium-silicate-hydrate. Thus, the strength is reduced, and the permeability increases.

In order to prevent this reaction, it is normal to add SiO₂, silicon oxide, in the cement slurry. SiO₂ prevents the formation of alpha-calcium-silicate-hydrate. Instead, mono-calcium-silicate-hydrate is formed, which is a more stable binding. Thus, the strength is maintained. The most common way of adding the cement slurry SiO₂ is to add silica flour and silica sand. Both substances mainly consist of SiO₂.

Silica flour is a light grey/white powder produced from quarts. It is produced both in Europe and the U.S., and has a number of product names such as "SSA-1" from Halliburton Services, "D-66" from Dowell Schlumberger or "D-8" from B.J. Hughes. The specific weight is approx. 2.63 gcm⁻³. The grain size is between 2 and 200 micro-metres, approx. 50 weight% being less than 50 micro- metres. This is more or less the same grain size as oil well cement.

The silica sand is much more coarse-grained than silica flour. The size of the grains is usually from 1 to 2 mm. Also silica sand is produced from quarts and has a specific weight of approx. 2.63 gcm⁻³.

Silica flour is definitely the most common of these. In order to prevent strength reduction in the cement slurry, minimum 35 % silica flour must be used based on the weight of cement.

This silica flour is today mixed dry with the dry cement in silos onshore. This is done by blowing each dry substance with pressurized air from its respective silo into a third silo. Subsequently, the mixture is blown back and forth between two silos. This results in a somewhat homogeneous mixture. This blowing, however, deteriorates the properties of the finished cement slurry since the pressurized air contains small amounts of water. The properties that are deteriorated are: free water is increased, the filter loss increases and the setting time increases. These properties are all critical to a cement slurry.

With this mixing method, it is very difficult to get an accurate dosaging of the various components. This is due to the fact that measuring accurate amounts of dry substances represents a measurement-technical problem. In addition, there are problems obtaining a homogeneous and stable mixture.

The prior art also requires separate storage silos on the rigs for the storage of the dry mixture. This may in many cases involve problems due to poor silo capacity. In addition, so much dry mixture is mixed that there is enough for two jobs (100 % backup). What remains after the cementing job is done, is usually used in cement slurries that do not require such silica flour. The objective of this is to rid of the mixture, thus making the storage silo available for ordinary cement. This is rather unfavourable from an economic point of view.

Recently, it has been realized that the admixture of micro-silica also prevents reduction of strength at high temperatures. Micro-silica reacts the same way as silica flour in a cement slurry exposed to high temperatures. Also here, mono-calcium-silicate-hydrate is formed.

Silica dust collected from electro-thermal melting furnaces that produce at least 75 % ferrosilicon (Si contains at least 76 %) is preferably used as micro-silica, but dust from furnaces that produce 50 % ferrosilicon may also be used as a basis material for the present invention.

It is also possible to obtain silicon dust as a main product from the said melting furnaces by adjusting the reduction conditions. This type of amorphous silica can also be synthetically produced without reduction and re-oxidation. Alternatively, a silica dust generator can be used for the production of silica fines, or silica may be produced by precipitation.

In order for micro-silica to be easily transportable, the producer mixes it with approx. 50 weight% of fresh water. A liquid micro-silica with a specific weight of approx. 1.40 gcm⁻³ is then obtained. Elkem has e.g. given this mixture the product name "EMSAC 460S".

According to a known method, the cement slurry density must be reduced from approx. 1.90 gcc to approx. 1.70 gcc in order to add a sufficient amount of liquid micro-silica.

Subsequently, the mixture must be weighed up again to the desired density by means of weight materials. This is an inconvenient solution, even more serious, however, is the fact that this method gives a too viscous and thixotropic cement slurry.

The ph of the mixture is increased by another known method prior to adding all of the cement, thus allowing 35 % micro-silica to be added. Consequently, the tiny micro-silica particles flocculate, and this gives a non-gas-tight cement slurry. In addition, also this method gives a too viscous and thixotropic cement slurry.

The purpose of the present invention is to provide an improved procedure for the admixture of silicon oxide where the above-mentioned problems are overcome.

This, according to the present invention, is obtained by a procedure characterized by:
- amorphous silica with particles of less than 1 micro-metre being mixed with water to liquid micro-silica,
- silica flour with particles from 2 to 200 micro-metres being mixed in the liquid micro-silica and the thereby obtained silica mixture being added to a cement slurry directly in a mixing tank.

The invention also includes a hydraulic cement slurry which contains 5 - 100 % silicon oxide additive containing liquid amorphous silica with particles of less than 1 micro-metre with a silica flour admixture, based on the weight of cement, 2 - 200 % light weight aggregate with a particle density of between 0.1 and 1.5 g/cm³, based on the weight of cement, 0 - 5 % thinner (dry weight) based on the weight of cement, 1 - 10 % filter loss reducing agent (dry weight) based on the weight of cement, and water of such an amount that the cement slurry gets a density of between 0.8 and 2.0 g/cm³.

The amorphous silica dust used in the present invention mainly consists of submicron globular particles.

The silica dust particles may e.g. contain 60 - 100 weight% of SiO₂ and have a density of 2.0 - 2.40 g/cm³ and a specific surface area of 15 - 30 m²/g. The particles are mainly globular and are less than 1 micro-metre in size. These values may of course vary. For example, the silica dust may have a lower SiO₂ content and the particle size distribution may be adjusted, e.g. by coarse particles being removed.

Silica flour and liquid micro-silica are mixed so that the total of the two substances represents minimum 35 weight% of dry substance of the dry cement weight in a cement slurry. Thus, a reduction of strength at high temperature is prevented. The mixture of the 2 substances also gives good cement slurry properties, such as very low viscosity, minimal thixotropic properties, stable slurry, low filter loss and zero free water. In addition, slurries which contain more than a given amount of micro-silica have gas-tight properties.

The mixture of the two substances may be done onshore in a mixing plant. Since liquid micro-silica is one of the components, it can be measured with great accuracy. The silica flour is added in the liquid micro-silica until the desired density of the finished mixture is obtained. This gives an accurately composed mixture.

Other advantages of the invention:
- The mixture is entirely stable, even after several months' storage.
- The mixture pumpability is good and it may be added directly in a pre-mixing tank on rigs or directly in the mixing tanks on cement mixing units.
- Extra blowing of dry cement and silica flour from one silo to another is avoided.
- The mixture does not require a special storage tank on the rigs.
- Excessive amounts of the mixture can be returned onshore and stored for later use.

### MODES FOR CARRYING OUT THE INVENTION

The invention will now be further described by means of the following examples.

### Example 1

A silica mixture with the following composition was produced according to the present invention:

| | |
|---|---|
| Silica flour, "SSA-1" | 55.6 weight% |
| Micro-silica (50% dry substance) | 44.4 weight% |

The silica flour is "SSA-1" delivered by Halliburton Services, Tananger. Micro-silica is "EMSAC 460S" from Elkem, Bremanger Smelteverk (50 weight% of dry substance in water).

The rheologic properties at 20°C were:
600rpm = 210cp, 300rpm = 126cp, 200rpm = 94cp, 100rpm = 53cp.

The mixture of silica flour and liquid micro-silica may contain 5-80 weight% of silica flour, preferably 40-60 weight%, and 20-95 weight% of liquid micro-silica, preferably 40-60 weight%.

In addition, all types of weight materials, dispersants, retarders, accelerators, filter loss reducing substances, weight-reducing substances and anti-foam agents may be added to mixtures of silica flour in liquid micro-silica.

All types of materials used in oil well cement may be used as weight materials, preferably hematite, ilmenite or barite. The mixture may possibly contain 0-50 weight% of weight material, chiefly 0-20 weight%.

All such agents known to be used as plasticizing, or super-plasticizing, agents in cement-based systems may be used as dispersants. For example agents based on lignosulfonates, partly de-sulfonated lignosulfonates, polyhydroxyl-carboxyl acids, sulfonated naphthalene-formaldehyde - or sulfonated melamine-formaldehyde products.

The mixture may possibly contain 0-10 weight% of dispersant (based on dry substance), chiefly 0-2 weight%.

The mixture according to the present invention may contain retarders such as cellulose derivates, sugar derivates, ligno-sulfonates and lignins.

The mixture may possibly contain 0-10 weight% of retarder based on dry substance, preferably 0-2 weight%.

Sodium chloride (NaCI) and calcium chloride (CaCl₂) may be used as accelerator.

The mixture may possibly also contain 0-10 weight accelerator, preferably 0-2 weight%.

The mixture according to the present invention may contain filter loss reducing agents, e.g. agents based on amyl or amyl derivates, cellulose derivates such as carboxyl-ethyl-cellulose, methyl-cellulose or ethyl-cellulose, or synthetic polymers such as polyacrylonitrile or polyacrylamide.

The mixture may possibly contain 0-10 weight% of filter loss reducing agent (based on dry weight), preferably 0-2 weight%.

Hollow glass balls are particularly preferred as weight-reducing agents. This type of light weight aggregate is available under a number of product names, e.g. hollow glass balls produced by 3M Company, the U.S.

Also whole balls produced from shifting ashes may be used, e.g. the product "Fillite" produced by Fillite Ltd., England.

The mixture may possibly contain 0-50 weight% of weight reducing substances, preferably 0-30 weight%.

According to the present invention, fresh water or sea-water may be used as water. The mixture may possibly contain 0-50 weight% of water, preferably 0-20 weight%.

The mixture may be used in cement slurries based on all types of oil well cement described in API SPEC 10.

### Example 2

A typical cement slurry where the silicon dioxide mixture described above in this example is included:

| | |
|---|---|
| Norcem G-cement | 100 kg |
| Silica flour | 25 kg |
| Micro-silica, 50% dry substance | 20 kg |
| Filter loss reducing agent | 7 l |
| Dispersant | 0.5 kg |
| Retarder | 0.97 kg |
| Fresh water | 36.59 l |

This cement slurry had the following characteristics:

| | |
|---|---|
| Density: | 1.90 g/cm³ |
| Silica flour, "SSA-1" | 55.6 weight% |
| Micro-silica (50% dry substance) | 44.4 weight% |

The plastic viscosity was 84 cp, and the yield strength was 20.16 Pa.

The rheologic properties at 90°C:
300 rpm: 23 cp, 200 rpm: 17 cp, 100 rpm: 10 cp, 6 rpm: 1 cp.

| | |
|---|---|
| API SPEC 10 filter loss: | 34 cm³/30 min. |
| Pressure strength after 24 hours at 124^{o}C: | 216 bars. |

### Example 3

In order to compare the pressure strength of a cement slurry containing the silicon oxide mixture according to the present invention with a slurry according to known technology, two cement slurries, 1 and 2, with the following composition may be referred to:

### Slurry 1: (According to known technology).

| | |
|---|---|
| G-cement | 100.0 kg |
| Liquid micro-silica | 11.0 kg |
| Filter loss reducing substance | 0.5 kg |
| Dispersant | 3.0 l |
| Retarder | 0.27 l |
| Anti-foam agent | 0.20 l |
| Fresh water | 36.40 l |

The density of the slurry: 1.90 g/cm³.

### Slurry 2: (according to the invention).

| | |
|---|---|
| G-cement | 100.0 kg |
| Silica flour | 25.0 kg |
| Liquid micro-silica (50% dry substance) | 41.7 kg |
| Filter loss reducing substance | 10 l |
| Dispersant | 0.5 kg |
| Retarder | 0.4 kg |
| Anti-foam agent | 0.2 l |
| Fresh water | 78.86 l |

The density of the slurry: 1.60 g/cm³.

The development of the pressure strength over time at 134°C was measured with an "Ultrasonic Cement Analyzer" (UCA), and the results are given in the table below:

| Slurry no. | UCA pressure strength at 134^{o}C (bar) | | | | | | | |
|---|---|---|---|---|---|---|---|---|
| | 0.5 dg | 1 dg | 2 dg | 3 dg | 5 dg | 7 dg | 14 dg | 28 dg |
| 1 | 145 | 155 | 152 | 138 | 117 | 103 | 56 | - |
| 2 | 55 | 93 | 103 | 105 | 107 | 110 | 110 | 110 |
| Slurry no. 2 gets lower pressure strength than no. 1 at the beginning due to lower specific weight of the slurry. | | | | | | | | |

## Claims

1. Procedure for the admixture of silicon oxide to a hydraulic cement slurry, particularly for well cementing, **characterized by**
- amorphous silica with particles smaller than 1 micro-metre being mixed with water to an aquaeous suspension of micro-silica,
- silica flour with particles from 2 to 200 micro-metres being mixed in said liquid micro-silica,
- the thereby obtained silica mixture being added to cement slurry directly in a mixing tank.

2. Procedure according to claim 1,
**characterized by** 5 to 80 weight% of silica flour being added, preferably from 40 to 60 weight%, from 95 to 20 weight% of liquid micro-silica, preferably from 60 to 40 weight% based on the weight of dry substances, and from 0 to 50 weight% of water, preferably below 20 weight% based on the weight of dry substances, where the water may be fresh water or sea-water.

3. Procedure according to claims 1 and 2
**characterized by** said silica flour and micro-silica together representing 35 weight% of the cement on the basis of dry substances in a cement slurry.

4. Hydraulic cement slurry for oil well cementing
**characterized by** that it contains hydraulic cement, 5 - 100 % silicon oxide containing liquid amorphous silica with particles smaller than 1 micro-metre and with a silica flour admixture based on the weight of cement, 2 - 200 % light weight aggregate with a true particle density of between 0.1 and 1.5 g/cm³, based on the weight of cement, 0 - 5 % thinner (dry weight) based on the weight of cement, 1 - 10 % filter loss reducing agent (dry weight) based on the weight of cement, and water of such an amount that the cement slurry gets a density of between 0.8 and 2.0 g/cm³.

5. Hydraulic cement slurry according to claim 4,
**characterized by** this being produced according to the procedure stated in claims 1-3.

## Patentansprüche

1. Verfahren zum Mischen von Siliziumoxid zu einem hydraulischen Zementschlamm, insbesondere für die Brunnenzementierung, dadurch gekennzeichnet, daß
- amorphes Siliziumdioxid mit Teilchen kleiner als 1 Mikrometer mit Wasser zu einer wässerigen Suspension von Mikro-Siliziumdioxid vermischt wird,
- Silikamehl mit Teilchen von 2 bis 200 Mikrometern in dieses flüssige Mikro-Siliziumdioxid eingemischt wird, und
- die dadurch erhaltene Siliziumdioxidmischung einem Zementschlamm direkt in einem Mischbehälter beigegeben wird.

2. Verfahren nach Anspruch 1, dadurch gekennzeichnet, daß 5 bis 80 Gew.-% Silikamehl zugegeben werden, vorzugsweise 40 bis 60 Gew.-%, 95 bis 20 Gew.-% flüssiges Mikro-Siliziumdioxid, vorzugsweise 60 bis 40 Gew.-%, basierend auf dem Gewicht der Trockensubstanz, und 0 bis 50 Gew.-% Wasser, vorzugsweise weniger als 20 Gew.-%, basierend auf dem Gewicht der Trockensubstanz, wobei das Wasser Süßwasser oder Salzwasser sein kann.

3. Verfahren nach einem der Ansprüche 1 bis 2, dadurch gekennzeichnet, daß das Silikamehl und das Mikro-Siliziumdioxid gemeinsam 35 Gew.-% des Zements auf der Basis der Trockensubstanz in einem Zementschlamm darstellen.

4. Hydraulischer Zementschlamm zur Ölbrunnenzementierung, dadurch gekennzeichnet, daß er hydraulischen Zement enthält, 5 - 100% Siliziumoxid enthaltend flüssiges amorphes Siliziumdioxid mit Teilchen kleiner als 1 Mikrometer und mit einer Silikamehlmischung, 2 - 200%, basierend auf dem Zementgewicht, Leichtgewichtaggregat mit einer wahren Partikeldichte zwischen 0,1 und 1,5 g/cm³, 0 - 5% Verdünnungsmittel (Trockengewicht) basierend auf dem Zementgewicht, 1 - 10% Filtrationsverlust-Reduktionsmittel (Trockengewicht) basierend auf dem Zementgewicht, und Wasser in einer solchen Menge, daß der Zementschlamm eine Dichte zwischen 0,8 und 2,0 g/cm³ erhält.

5. Hydraulischer Zementschlamm nach Anspruch 4, dadurch gekennzeichnet, daß er nach dem Verfahren von Anspruch 1-3 hergestellt wird.

## Revendications

1. Procédé de mélange d'oxyde de silicium à un lait de ciment hydraulique, particulièrement pour la cimentation d'un puits, caractérisé en ce que :
- de la silice amorphe ayant des particules inférieures à 1 »m est mélangée à de l'eau pour former une suspension aqueuse de microsilice;
- de la farine de silice ayant des particules de 2 à 200 »m est mélangée à la microsilice liquide;
- le mélange de silice ainsi obtenu est ajouté au lait de ciment, directement dans un réservoir de mélange.

2. Procédé suivant la revendication 1, caractérisé en ce que 5 à 80% en poids de farine de silice sont ajoutés, de préférence de 40 à 60% en poids, de 95 à 20% en poids de microsilice liquide, de préférence de 60 à 40% en poids, sur base du poids de matières sèches et de 0 à 50% en poids d'eau, de préférence moins de 20% en poids, sur base du poids de matières sèches, où l'eau peut être de l'eau fraîche ou de l'eau de mer.

3. Procédé suivant les revendications 1 et 2, caractérisé en ce que la farine de silice et la microsilice représentent ensemble 35% en poids du ciment sur base des matières sèches d'un lait de ciment.

4. Lait de ciment hydraulique pour la cimentation de puits de pétrole, caractérisé en ce qu'il contient du ciment hydraulique, 5 à 100% en poids d'oxyde de silicium contenant de la silice amorphe liquide ayant des particules inférieures à 1 »m en mélange avec de la farine de silice, sur base du poids de ciment, 2 à 200% en poids d'agrégats de densité particulaire vraie entre 0,1 et 1,5 g par cm³, sur base du poids de ciment, 0 à 5% de diluant (poids sec), sur base du poids de ciment, 1 à 10% d'agent réducteur de perte à la filtration (poids sec), sur base du poids de ciment, et de l'eau en une quantité telle que le lait de ciment ait une densité d'entre 0,8 et 2,0 g par cm³.

5. Lait de ciment hydraulique suivant la revendication 4, caractérisé en ce qu'il est produit par le procédé établi dans les revendications 1 à 3.
